# EUROPEAN PATENT APPLICATION

(11) **EP 4 835 969 A1**
(43) Date of publication of application: **04.11.2026**
(21) Application number: 24912121.1
(22) Date of filing: 22.11.2024
(51) Int. Cl.: H01M 4/13, H01M 4/139, H01M 4/38, H01M 4/48, H01M 10/052, H01M 10/0587, H01M 50/107

(54) **NON-AQUEOUS ELECTROLYTE SECONDARY BATTERY, AND METHOD FOR MANUFACTURING NON-AQUEOUS ELECTROLYTE SECONDARY BATTERY**

(30) Priority: 26.12.2023 JP 2023218920
(71) Applicant: Panasonic Intellectual Property Management Co., Ltd., Kadoma-shi, Osaka 571-0057 (JP)
(72) Inventor: ITA, Shuhei, Osaka 571-0057 (JP)
(74) Representative: Eisenführ Speiser
(86) International application number: PCT/JP2024/041406
(87) International publication number: WO 2025/142228

(57) **Abstract**

A non-aqueous electrolyte secondary battery comprising: an electrode body (14) in which an elongated positive electrode (11) and an elongated negative electrode (12) are wound with a separator (13) interposed therebetween; and a bottomed cylindrical outer can that accommodates the electrode body (14), wherein said non-aqueous electrolyte secondary battery is characterized in that the negative electrode (12) has a negative electrode current collector exposed portion (43) in which a negative electrode mixture layer (41) is not provided on at least the outer peripheral surface of the negative electrode current collector (40) and the negative electrode current collector (40) is exposed, the negative electrode current collector exposed portion (43) is provided on the outermost periphery of the electrode body (14), an adhesive layer (50) is provided on at least a portion of the inner peripheral surface of the negative electrode current collector exposed portion (43), and the negative electrode current collector exposed portion (43) is bonded to the negative electrode (12) facing the negative electrode current collector exposed portion (43) by the adhesive layer (50).

## Description

### TECHNICAL FIELD

The present disclosure relates to a non-aqueous electrolyte secondary battery and to a method of manufacturing a non-aqueous electrolyte secondary battery.

### BACKGROUND ART

Generally, a non-aqueous electrolyte secondary battery includes an electrode assembly in which a band-shaped positive electrode and a band-shaped negative electrode are wound around a separator and a housing can that houses the electrode assembly. Patent Literature 1 discloses a non-aqueous electrolyte secondary battery provided with a negative electrode current collector exposed portion where a negative electrode current collector made of copper foil or the like is exposed at the outermost circumference of an electrode assembly. By bringing the negative electrode current collector exposed portion into contact with the inner surface of the housing can, the housing can functions as a negative electrode terminal. In addition, Patent Literature 1 discloses applying tape to the negative electrode current collector exposed portion provided on the outermost circumference of the electrode assembly and fixing the end of the negative electrode winding.

### CITATION LIST

### PATENT LITERATURE

PATENT LITERATURE 1: International Publication No. WO 2018/168628

### SUMMARY

When tape is applied to the negative electrode current collector exposed portion arranged on the outermost circumference and the end of the negative electrode winding is fixed, repeating charging and discharging results in increasing the diameter of the electrode assembly due to expansion of a mixture layer during charging, which tends to cause stress to concentrate at an end edge portion of the tape. As a result, there is a risk that damage such as cracks in the electrode plates may occur in the vicinity of the end edge portion of the tape.

A non-aqueous electrolyte secondary battery that is an aspect of the present disclosure comprises: an electrode assembly in which a band-shaped positive electrode and a band-shaped negative electrode are wound around a separator; and a cylindrical bottomed housing can that houses the electrode assembly, wherein the negative electrode includes, on at least an outer circumferential surface of a negative electrode current collector, a negative electrode current collector exposed portion where a negative electrode mixture layer is not provided and the negative electrode current collector is exposed, the negative electrode current collector exposed portion is provided on an outermost circumference of the electrode assembly, an adhesion layer is provided in at least a part of an inner circumferential surface of the negative electrode current collector exposed portion, and the negative electrode current collector exposed portion is bonded to the negative electrode opposite to the negative electrode current collector exposed portion by the adhesion layer.

In addition, a method of manufacturing a non-aqueous electrolyte secondary battery that is an aspect of the present disclosure comprises the steps of: forming an electrode assembly by winding a band-shaped positive electrode and a band-shaped negative electrode around a separator; forming an adhesion layer on an inner circumferential surface of a negative electrode current collector exposed portion where a negative electrode mixture layer is not provided on at least an outer circumferential surface of a negative electrode current collector; forming a slit that extends in a width direction of the negative electrode on a winding inner side relative to the adhesion layer in the negative electrode; and cutting the slit after inserting the electrode assembly, to which the negative electrode current collector exposed portion is bonded by the adhesion layer, into a cylindrical bottomed housing can.

According to the non-aqueous electrolyte secondary battery that is an aspect of the present disclosure, damage to electrode plates when charging and discharging are repeated can be suppressed.

### BRIEF DESCRIPTION OF DRAWING

FIG. 1 is a sectional view in an axial direction of a non-aqueous electrolyte secondary battery that is an example of an embodiment.
FIG. 2 is a perspective view of an electrode assembly constituting the non-aqueous electrolyte secondary battery that is an example of the embodiment.
FIG. 3 is a sectional view in a radial direction of a negative electrode in a vicinity of an outermost circumference of the electrode assembly.
FIG. 4 is a perspective view of an electrode assembly that constitutes a non-aqueous electrolyte secondary battery that is another example of the embodiment.

### DESCRIPTION OF EMBODIMENTS

Hereinafter, an example of an embodiment of a cylindrical battery related to the present disclosure will be described in detail with reference to the accompanying drawings. The embodiment described below is merely an example and the present disclosure is not limited to the following embodiment. In addition, configurations created by selectively combining respective constituent elements of the embodiment described below are included in the scope of the present disclosure.

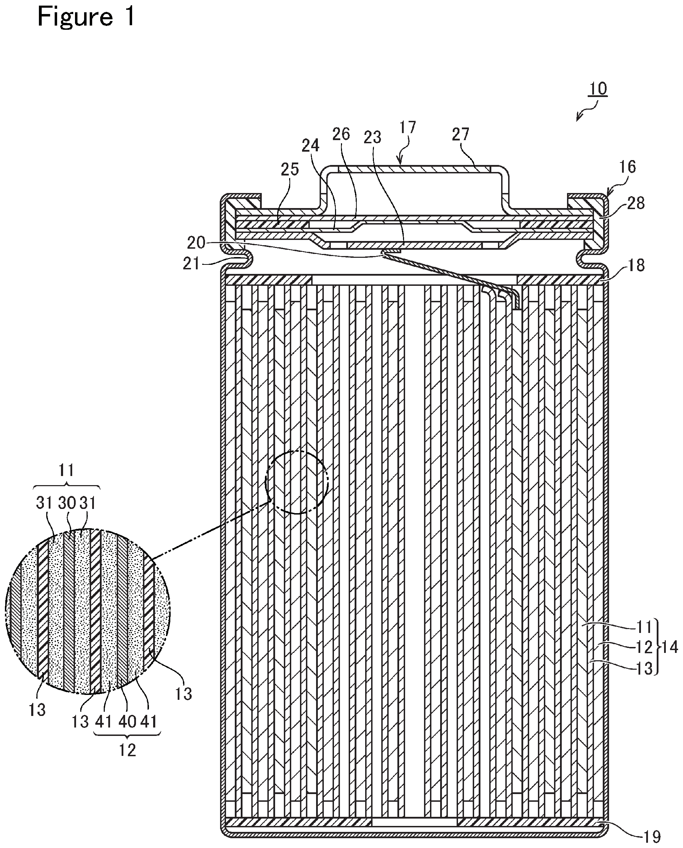

A configuration of a non-aqueous electrolyte secondary battery 10 will be described with reference to FIG. 1. FIG. 1 is a sectional view in an axial direction of the non-aqueous electrolyte secondary battery 10.

As shown in FIG. 1, the non-aqueous electrolyte secondary battery 10 includes an electrode assembly 14, a non-aqueous electrolyte (not illustrated), and a housing can 16 that houses the electrode assembly 14 and the non-aqueous electrolyte. The housing can 16 is a cylindrical bottomed metal container with one side in an axial direction opened, and the opening of the housing can 16 is sealed by a sealing assembly 17. Hereinafter, for convenience of description, a side of the sealing assembly 17 of the non-aqueous electrolyte secondary battery 10 will be referred to as "up" or "above" and a side of a bottom portion of the housing can 16 will be referred to as "down" or "below".

Although details will be described later, the electrode assembly 14 includes a positive electrode 11, a negative electrode 12, and a separator 13 and has a winding structure in which the positive electrode 11 and the negative electrode 12 are wound in a spiral shape around the separator 13. The electrode assembly 14 includes a positive electrode lead 20 connected to the positive electrode 11 by welding or the like.

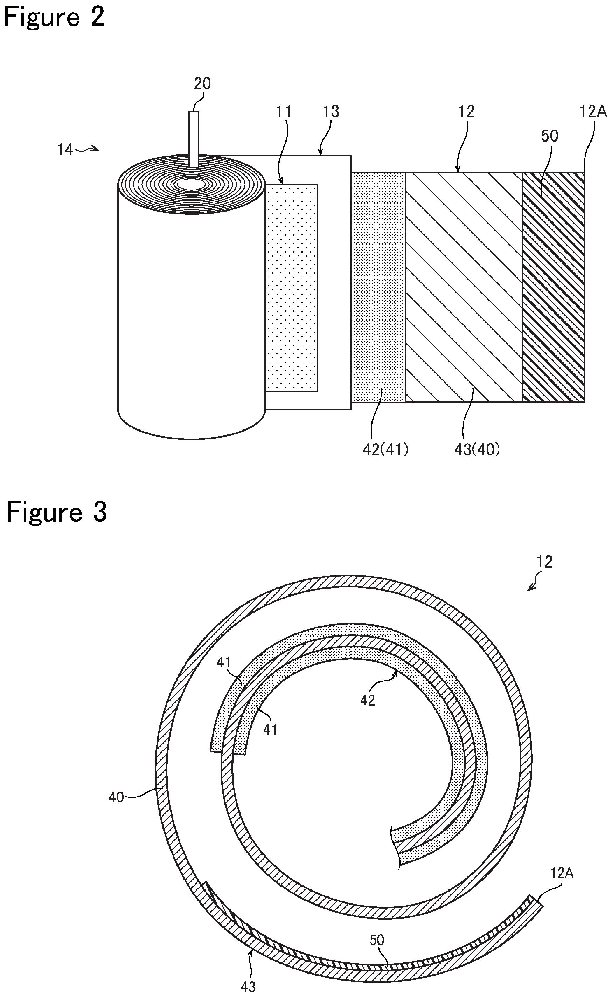

Insulating plates 18 and 19 are arranged above and below the electrode assembly 14, respectively. In the example shown in FIG. 1, the positive electrode lead 20 passes through a through-hole of the insulating plate 18 and extends to the side of the sealing assembly 17. The positive electrode lead 20 is connected to a lower surface of an internal terminal plate 23 of the sealing assembly 17, and a cap 27 constitutes a top plate of the sealing assembly 17 electrically connected to the internal terminal plate 23 to make the cap 27 a positive electrode terminal. Note that there may be two or more positive electrode leads 20. Although details will be described later, a negative electrode current collector exposed portion 43 (refer to FIG. 2) where a negative electrode current collector 40 is exposed is provided on an outermost circumference of the electrode assembly 14, and the negative electrode current collector exposed portion 43 abuts against an inner surface of the housing can 16. Accordingly, the housing can 16 becomes a negative electrode terminal.

The non-aqueous electrolyte has lithium-ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, for example, esters, ethers, nitriles, amides, and mixtures of two or more of these substances are used. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents is replaced with halogen atoms such as fluorine. For example, lithium salts such as LiPF₆ are used as the electrolyte salts.

As the solid electrolyte, for example, a solid or gel polymer electrolyte, an inorganic solid electrolyte, and the like can be used. As the inorganic solid electrolyte, known materials used in all-solid-state lithium-ion secondary batteries and the like (for example, oxide-based solid electrolytes, sulfide-based solid electrolytes, and halogen-based solid electrolytes) can be used. A polymer electrolyte contains, for example, a lithium salt and a matrix polymer or a non-aqueous solvent, a lithium salt, and a matrix polymer. As the matrix polymer, for example, a polymer material that absorbs a non-aqueous solvent and becomes a gel is used. Examples of polymer materials include fluorine resins, acrylic resins, and polyether resins.

The housing can 16 is a cylindrical bottomed metal container with one side in an axial direction opened. A gasket 28 is provided between the housing can 16 and the sealing assembly 17 to ensure sealability of the interior of the battery and insulation properties between the housing can 16 and the sealing assembly 17. A grooved portion 21 which is a part of a side wall portion projecting inward and which supports the sealing assembly 17 is formed in the housing can 16. The grooved portion 21 is preferably formed in an annular shape along a circumferential direction of the housing can 16 and supports the sealing assembly 17 with an upper surface thereof. The sealing assembly 17 is fixed to an upper part of the housing can 16 by the grooved portion 21 and an opening end portion of the housing can 16 which is crimped with respect to the sealing assembly 17.

The sealing assembly 17 has a structure in which the internal terminal plate 23, a lower vent member 24, an insulating member 25, an upper vent member 26, and the cap 27 are stacked in order from a side of the electrode assembly 14. Each member constituting the sealing assembly 17 has, for example, a disk shape or a ring shape and the respective members excluding the insulating member 25 are electrically connected to each other. The lower vent member 24 and the upper vent member 26 are connected to each other at respective centers thereof and the insulating member 25 is interposed between respective peripheral portions thereof. When an abnormality occurs in the battery and internal pressure rises, due to the lower vent member 24 deforming and breaking so as to push the upper vent member 26 upward to the side of the cap 27, a current path between the lower vent member 24 and the upper vent member 26 is interrupted. As the internal pressure rises further, the upper vent member 26 ruptures and gas is discharged through an opening portion of the cap 27.

Hereinafter, the configuration of the electrode assembly 14 will be described in detail with further reference to FIGS. 2 and 3. FIG. 2 is a perspective view of the electrode assembly 14 and FIG. 3 is a sectional view in a radial direction of the negative electrode 12 in a vicinity of the outermost circumference of the electrode assembly 14. Note that in FIG. 3, spacing in the radial direction of the negative electrode 12 is shown wider than in reality to make the arrangement of the negative electrode 12 and the adhesion layer 50 easier to understand.

As shown in FIGS. 1 and 2, the electrode assembly 14 has a winding structure in which the positive electrode 11 and the negative electrode 12 are wound in a spiral shape around the separator 13. In other words, the separator 13 isolates the positive electrode 11 and the negative electrode 12 from each other, thereby preventing the positive electrode 11 and the negative electrode 12 from coming into contact and causing a short circuit.

The positive electrode 11, the negative electrode 12, and the separator 13 are all formed in band shapes and wound spirally around the winding core arranged along a winding axis, resulting in a state of being alternately laminated in the radial direction of the electrode assembly 14. In other words, in the electrode assembly 14, the longitudinal direction of the positive electrode 11, the negative electrode 12, and the separator 13 corresponds to the winding direction, while the width direction of the positive electrode 11, the negative electrode 12, and the separator 13 corresponds to the axial direction.

The positive electrode 11 includes a positive electrode current collector 30 and a positive electrode mixture layer 31 formed on the positive electrode current collector 30. As the positive electrode current collector 30, a foil of a metal that is stable in a potential range of the positive electrode 11 such as aluminum or an aluminum alloy and a film with the metal arranged on a surface layer can be used. The positive electrode mixture layer 31 includes a positive electrode active material, a conductive agent, and a binding agent and is preferably formed on both surfaces of the positive electrode current collector 30 with the exception of a positive electrode current collector exposed portion (not illustrated) to which the positive electrode lead 20 is to be welded. For example, the positive electrode 11 can be fabricated by coating the positive electrode current collector 30 with a positive electrode mixture slurry containing the positive electrode active material, the conductive agent, the binding agent, and the like, letting the coating film dry, and then compressing the positive electrode current collector 30.

The positive electrode mixture layer 31 contains a granulated lithium metal composite oxide as the positive electrode active material. A lithium metal composite oxide is a composite oxide containing metal elements such as Co, Mn, Ni, and Al in addition to Li. The metal element comprising the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni, and Mn is preferable. Examples of suitable composite oxides include a lithium metal composite oxide containing Ni, Co, and Mn and a lithium metal composite oxide containing Ni, Co, and Al.

Examples of the conductive agent included in the positive electrode mixture layer 31 include carbon black such as acetylene black and Ketjen black, graphite, carbon nanotubes (CNT), carbon nanofibers, graphene, and other carbon materials. Examples of the binding agent included in the positive electrode mixture layer 31 include fluorinated resins such as polytetrafluoroethylene (PTFE) and polyvinylidene fluoride (PVDF), polyacrylonitrile (PAN), polyimide, acrylic resins, and polyolefin. In addition, these resins may be used in combination with carboxymethyl cellulose (CMC) or its salts, polyethylene oxide (PEO), and the like.

The negative electrode 12 includes a negative electrode current collector 40 and a negative electrode mixture layer 41 formed on the negative electrode current collector 40. As the negative electrode current collector 40, a foil of a metal that is stable in a potential range of the negative electrode 12 such as copper or a copper alloy or a film with the metal arranged on a surface layer can be used. A thickness of the negative electrode current collector 40 is, for example, greater than or equal to 5 µm and less than or equal to 50 µm. The negative electrode mixture layer 41 includes a negative electrode active material, a binding agent, and, if necessary, a conductive agent. The negative electrode 12 can be fabricated by coating a surface of the negative electrode current collector 40 with a negative electrode mixture slurry containing the negative electrode active material, the binding agent, and the like, letting the coating film dry, and then compressing the negative electrode current collector 40.

The negative electrode 12 includes a negative electrode mixture layer coated portion 42 in which the negative electrode mixture layer 41 is provided on both surfaces of the negative electrode current collector 40 and a negative electrode current collector exposed portion 43 in which the negative electrode mixture layer 41 is not provided and the negative electrode current collector 40 is exposed on at least the outer circumferential surface of the negative electrode current collector 40. In the present embodiment, the negative electrode mixture layer coated portion 42 is provided over the entire negative electrode current collector 40 excluding the region where the negative electrode current collector exposed portion 43 is provided.

The negative electrode current collector exposed portion 43 is provided on an outermost circumferential surface of the electrode assembly 14. In addition, in the present embodiment, the negative electrode current collector exposed portion 43 opposes the negative electrode 12. In other words, the electrode assembly 14 has the negative electrode 12 arranged around its outermost circumference for greater than or equal to two circumferences. Note that a part of or all of the negative electrode current collector exposed portion 43 may oppose the separator 13.

While the negative electrode current collector exposed portion 43 may be provided in a partial region of the outermost circumference of the electrode assembly 14, the negative electrode current collector exposed portion 43 is preferably provided around the entire outermost circumference of the electrode assembly 14. For example, the negative electrode current collector exposed portion 43 is provided over a range of a length about greater than or equal to one circumference and less than or equal to two circumferences of the electrode assembly 14, starting from an end portion 12A being one end of the negative electrode 12 in the length direction located on the outer circumferential surface of the electrode assembly 14. In addition, the negative electrode current collector exposed portion 43 is arranged so as to abut against the inner surface of the housing can 16.

In the present embodiment, in the negative electrode current collector exposed portion 43, the negative electrode mixture layer 41 is not provided on both surfaces of the negative electrode current collector 40 and both surfaces of the negative electrode current collector 40 are exposed. Due to both surfaces of the negative electrode current collector 40 being exposed in the negative electrode current collector exposed portion 43, the adhesion layer 50 (to be described later) can be readily formed in the negative electrode current collector exposed portion 43.

As shown in FIGS. 2 and 3, the adhesion layer 50 is provided on the inner circumferential surface of the negative electrode current collector exposed portion 43 on the winding end side, and the negative electrode current collector exposed portion 43 is bonded to the opposing negative electrode 12 by the adhesion layer 50. In other words, the outermost circumferential surface of the electrode assembly 14 according to the present embodiment is not provided with a member for fixing the end portion 12A of the negative electrode 12 such as a tape and is provided with only the negative electrode current collector exposed portion 43. Accordingly, even when an increase in the diameter of the electrode assembly 14 due to expansion of the negative electrode mixture layer 41 during charging occurs, stress concentration at an end edge portion of the tape does not occur and damage such as cracks in the electrode plates does not occur in the vicinity of the end edge portion of the tape. For example, the adhesion layer 50 may be formed in the negative electrode current collector exposed portion 43 before the negative electrode 12 is wound in a spiral shape or may be formed in the negative electrode current collector exposed portion 43 while the negative electrode 12 is being wound in a spiral shape.

The adhesion layer 50 contains, for example, at least one of a rubber-based polymer, a silicone-based polymer, and an acrylic-based polymer. Since rubber-based polymers, silicone-based polymers, and acrylic-based polymers possess adhesive properties, the negative electrode current collector exposed portion 43 can be bonded to the opposing negative electrode 12.

A thickness of the adhesion layer 50 is preferably less than or equal to 5.0 µm and more preferably less than or equal to 4.0 µm. Reducing the thickness of the adhesion layer 50 enables the negative electrode current collector exposed portion 43 to be bonded without having to increase the outer diameter of the electrode assembly 14. While a lower limit of the thickness of the adhesion layer 50 is not particularly limited, the lower limit is, for example, 0.5 µm from the perspective of work efficiency when pasting the adhesion layer 50 to the negative electrode current collector exposed portion 43.

The adhesion layer 50 is preferably provided in a region including the end portion 12A of the negative electrode 12 in the inner circumferential surface of the negative electrode current collector exposed portion 43. In other words, the adhesion layer 50 is preferably provided from the end portion 12A of the negative electrode 12 toward a winding inner side. Accordingly, the end portion 12A of the negative electrode 12 can be bonded and the electrode assembly 14 can be readily inserted into the housing can 16 in a battery manufacturing step. Note that the adhesion layer 50 need not be provided at the end portion 12A of the negative electrode 12 and may be provided toward the winding inner side from a position at a distance from the end portion 12A of the negative electrode 12. In this case, the end portion 12A of the negative electrode 12 remains unbonded.

For example, the adhesion layer 50 is provided in a range of a length less than or equal to 0.5 circumferences of the electrode assembly 14 from the end portion 12A of the negative electrode 12. In this case, the negative electrode current collector exposed portion 43 can be bonded without increasing the outer diameter of the electrode assembly 14. In addition, for example, the adhesion layer 50 is provided in a range of a length greater than or equal to 0.1 circumferences of the electrode assembly 14 from the end portion 12A of the negative electrode 12. In this case, the negative electrode current collector exposed portion 43 can be tightly bonded. Therefore, for example, the adhesion layer 50 is provided in a range of a length greater than or equal to 0.1 circumferences and less than or equal to 0.5 circumferences of the electrode assembly 14 from the end portion 12A of the negative electrode 12.

Preferably, the adhesion layer 50 is provided across the width direction (transverse direction) of the negative electrode 12 or, in other words, over the entire region extending from the upper end to the lower end of the negative electrode current collector 40. In this case, the negative electrode current collector exposed portion 43 can be tightly bonded.

The negative electrode mixture layer 41 preferably contains a carbon material and a silicon-containing material as the negative electrode active material. The inclusion of the silicon-containing material facilitates both high capacity and excellent cycle characteristics. For example, as the negative electrode active material, a material containing at least one of an element such as Sn that alloys with Li and a material containing the element may be used in the negative electrode mixture layer 41.

From the viewpoint of high capacity, a content of the silicon-containing material is preferably greater than or equal to 5% by mass of the total mass of the negative electrode active material, more preferably greater than or equal to 8% by mass, and even more preferably greater than or equal to 10% by mass.

In general, silicon-containing materials exhibit greater volume changes during charging and discharging than carbon materials. Therefore, when including a silicon-containing material as the negative electrode active material, the electrode assembly 14 readily expands in the radial direction after repeated charging and discharging. In the present embodiment, the end portion 12A of the negative electrode 12 is bonded by the adhesion layer 50 without using a tape. Accordingly, even when the electrode assembly 14 expands in the radial direction, stress concentration attributable to the tape does not occur and damage to the negative electrode 12 can be suppressed. In other words, the advantageous effect of the present disclosure becomes more pronounced when including a silicon-containing material as the negative electrode active material.

A carbon material that serves as the negative electrode active material is, for example, at least one selected from the group consisting of natural graphite, artificial graphite, soft carbon, and hard carbon. Among these materials, as the carbon material, at least an artificial graphite such as massive artificial graphite (MAG) and graphitized mesophase carbon microbeads (MCMB), a natural graphite such as scale-like graphite, lump graphite, and earthy graphite, or a mixture of these materials are preferably used. A volume-based D50 of the carbon material is, for example, greater than or equal to 1 µm and less than or equal to 30 µm, and preferably greater than or equal to 5 µm and less than or equal to 25 µm.

The silicon-containing material may be any material that contains Si, and examples include silicon alloys, silicon compounds, and Si-containing composite materials. Among these materials, Si-containing composite materials are preferable. The D50 of composite materials is generally smaller than the D50 of graphite. A volume-based D50 of the composite material is, for example, greater than or equal to 1 µm and less than or equal to 15 µm. Note that one of these materials may be used independently or two or more of these materials may be used in combination as the silicon-containing material.

A suitable silicon-containing material (composite material) is composite particles containing an ion-conducting phase, a Si phase dispersed in the ion-conducting phase, and a conductive layer covering the surface of the ion-conducting phase. The ion-conducting phase is, for example, at least one selected from the group consisting of a silicate phase, an amorphous carbon phase, a silicide phase, and a silicon oxide phase. The Si phase is formed by Si dispersed in the form of fine particles. The ion-conducting phase is a continuous phase comprising a finer set of particles than the Si phase. The conductive layer comprises a material with higher conductivity than the ion-conducting phase and forms a favorable conductive path in the negative electrode mixture layer 41.

An example of a suitable composite material containing Si is composite particles that have a sea-island structure with fine Si dispersed approximately uniformly in an amorphous silicon oxide phase and is represented as a whole by the general formula SiOₓ (0 < x ≤ 2). A main component of silicon oxide may be silicon dioxide. A content ratio (x) of oxygen to Si is, for example, 0.5 ≤ x < 2.0, and preferably 0.8 ≤ x ≤ 1.5.

In a similar manner to the positive electrode mixture layer 31, although fluorine-containing resin, PAN, polyimide, acrylic resin, polyolefin, and the like can be used for the binding agent included in the negative electrode mixture layer 41, styrene-butadiene rubber (SBR) is preferably used. In addition, the negative electrode mixture layer preferably contains CMC or its salts, polyacrylic acid (PAA) or its salts, polyvinyl alcohol (PVA), or the like. In particular, suitably, SBR is used in combination with CMC or its salts, PAA or its salts, or the like. The negative electrode mixture layer 41 may include a conductive agent such as CNT.

A porous sheet with ion permeability and insulation properties is used as the separator 13. Specific examples of the porous sheet include microporous thin films, woven fabrics, and non-woven fabrics. Polyolefins such as polyethylene and polypropylene, and cellulose are preferable materials for the separator 13. The separator 13 may have a single-layer structure or a multi-layer structure. In addition, a highly heat-resistant resin layer such as aramid resin may be formed on a surface of the separator 13. A filler layer including an inorganic filler may be formed at an interface between the separator 13 and at least one of the positive electrode 11 and the negative electrode 12.

It should be noted that the embodiment described above may be modified as appropriate without departing from the purpose of the present disclosure. For example, while the electrode assembly 14 does not include a negative electrode lead in the embodiment described above, the electrode assembly 14 may include a negative electrode lead. For example, the negative electrode current collector exposed portion 43 may be provided at a beginning side of winding of the negative electrode 12 and the negative electrode lead may be welded to the negative electrode current collector exposed portion 43.

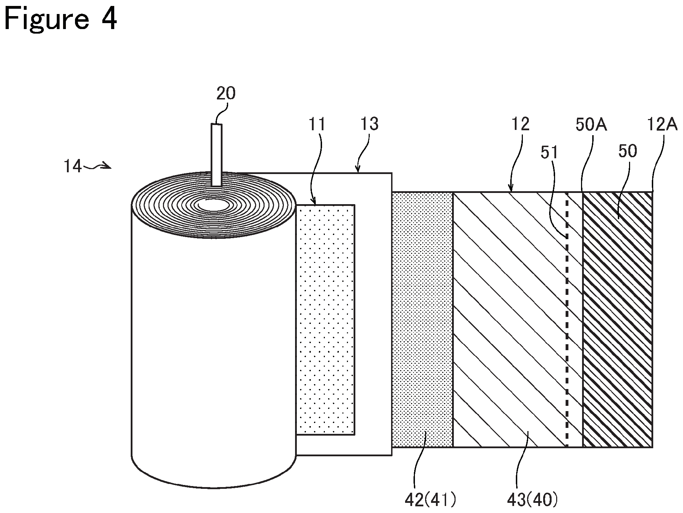

In addition, as shown in FIG. 4, the negative electrode 12 may be provided with a slit 51 that extends along the width direction of the negative electrode 12 on a winding inner side relative to the adhesion layer 50. In a manufacturing step of the non-aqueous electrolyte secondary battery 10, for example, pressure may be applied to the interior of the housing can 16 for the purpose of alleviating internal stress in the electrode assembly 14. In doing so, the internal stress in the electrode assembly 14 may be alleviated by cutting the slit 51. Note that the slit 51 may be a slit that penetrates the negative electrode 12 in the thickness direction or a slit that does not penetrate the negative electrode 12 in the thickness direction. Furthermore, the slit 51 may be provided across the entire width of the negative electrode 12 or provided only over a portion of the width of the negative electrode 12.

An example of a method of manufacturing the non-aqueous electrolyte secondary battery 10 in which the negative electrode 12 has the slit 51 which is to be ultimately cut will now be described. For example, the method of manufacturing the non-aqueous electrolyte secondary battery 10 includes: an adhesion layer forming step of forming the adhesion layer 50; a slit forming step of forming the slit 51 in the negative electrode 12; an electrode assembly forming step of forming the wound electrode assembly 14; and a cutting step of cutting the slit 51 after inserting the electrode assembly 14 into the housing can 16. Note that the adhesion layer forming step and the slit forming step may be performed before the electrode assembly forming step or during the electrode assembly forming step. In addition, the slit forming step may be performed before the adhesion layer forming step or after the adhesion layer forming step.

In the adhesion layer forming step, the adhesion layer 50 is applied to the inner circumferential surface of the negative electrode current collector exposed portion 43, for example, within a range of a predetermined length from the end portion 12A of the negative electrode 12. A method of applying the adhesion layer 50 is not particularly limited and examples include roll coaters, reverse roll coaters, transfer roll coaters, gravure coaters, gravure reverse coaters, comma coaters, rod coaters, blade coaters, bar coaters, wire bar coaters, die coaters, lip coaters, and dip coaters.

In the slit forming step, the slit 51 is formed at a position on the winding inner side relative to the adhesion layer 50. A method of forming the slit 51 is not particularly limited and examples of methods include using known perforating machines and slitting machines. While the position at which the slit 51 is formed may be anywhere on the winding inner side relative to the adhesion layer 50, the slit 51 is preferably formed within a range of greater than or equal to 1 mm and less than or equal to 30 mm along the longitudinal direction of the negative electrode 12 from the end portion 50A of the adhesion layer 50 on the winding start side (refer to FIG. 4). In addition, a shape, size, and the like of the slit 51 are not particularly limited as long as the slit 51 can be cut in a cutting step to be described later.

In the electrode assembly forming step, the electrode assembly 14 is formed by winding the band-shaped positive electrode 11 and the band-shaped negative electrode 12 around the separator 13. After forming the electrode assembly 14, the end portion 12A of the negative electrode 12 on the winding end side can be bonded using the adhesion layer 50 by pressing the portion where the adhesion layer 50 is formed from radially outward.

In the cutting step, the electrode assembly 14 fabricated in the electrode assembly forming step and in which the end portion 12A of the negative electrode 12 on the winding end side is bonded by the adhesion layer 50 is inserted into the housing can 16. Then, the slit 51 is cut by applying a load from outside. Accordingly, the electrode assembly 14 spreads outward in the radial direction and internal stress of the electrode assembly 14 can be alleviated. In addition, when the electrode assembly 14 spreads outward in the radial direction, the negative electrode current collector exposed portion 43 that is the outermost circumferential surface of the electrode assembly 14 abuts against the inner surface of the housing can 16.

Examples of methods of cutting the slit 51 include a method of pressurizing the interior of the housing can 16. By pressurizing the interior of the housing can 16, a force oriented outward in the radial direction is applied to the electrode assembly 14. At this point, the slit 51 can be cut by also applying a load to the slit 51. Note that the method of cutting the slit 51 is not limited thereto. For example, after inserting the electrode assembly 14 in which the negative electrode current collector exposed portion 43 has been bonded with the adhesion layer 50 into the housing can 16, the slit 51 may be cut by applying tension to the negative electrode 12.

The present disclosure is further illustrated by the following embodiments.
Configuration 1:
   A non-aqueous electrolyte secondary battery, comprising:
   an electrode assembly in which a band-shaped positive electrode and a band-shaped negative electrode are wound around a separator; and
   a cylindrical bottomed housing can that houses the electrode assembly, wherein
   the negative electrode includes, on at least an outer circumferential surface of a negative electrode current collector, a negative electrode current collector exposed portion where a negative electrode mixture layer is not provided and the negative electrode current collector is exposed,
   the negative electrode current collector exposed portion is provided on an outermost circumference of the electrode assembly,
   an adhesion layer is provided in at least a part of an inner circumferential surface of the negative electrode current collector exposed portion, and
   the negative electrode current collector exposed portion is bonded to the negative electrode opposite to the negative electrode current collector exposed portion by the adhesion layer.
Configuration 2:
   The non-aqueous electrolyte secondary battery according to Configuration 1, wherein the adhesion layer is provided in a range of a length less than or equal to 0.5 circumferences of the electrode assembly from an end portion of the negative electrode on the winding end side.
Configuration 3:
   The non-aqueous electrolyte secondary battery according to Configuration 1 or 2, wherein a thickness of the adhesion layer is less than or equal to 5.0 µm.
Configuration 4:
   The non-aqueous electrolyte secondary battery according to any one of Configurations 1 to 3, wherein the adhesion layer is provided across the width of the negative electrode.
Configuration 5:
   The non-aqueous electrolyte secondary battery according to any one of Configurations 1 to 4, wherein only the negative electrode current collector exposed portion is provided on an outermost circumferential surface of the electrode assembly.
Configuration 6:
   The non-aqueous electrolyte secondary battery according to any one of Configurations 1 to 5, wherein the negative electrode mixture layer includes a silicon-containing material as the negative electrode active material.
Configuration 7:
   The non-aqueous electrolyte secondary battery according to any one of Configurations 1 to 6, wherein the negative electrode is provided with a slit that extends along a width direction of the negative electrode on a winding inner side relative to the adhesion layer.
Configuration 8:
   A method of manufacturing a non-aqueous electrolyte secondary battery, comprising the steps of:
   forming an electrode assembly by winding a band-shaped positive electrode and a band-shaped negative electrode around a separator;
   forming an adhesion layer on an inner circumferential surface of a negative electrode current collector exposed portion where a negative electrode mixture layer is not provided on at least an outer circumferential surface of a negative electrode current collector;
   forming a slit that extends in a width direction of the negative electrode on a winding inner side relative to the adhesion layer in the negative electrode; and
   cutting the slit after inserting the electrode assembly, to which the negative electrode current collector exposed portion is bonded by the adhesion layer, into a cylindrical bottomed housing can.
Configuration 9:
   The method of manufacturing a non-aqueous electrolyte secondary battery according to Configuration 8, wherein the slit is cut by pressurizing the interior of the housing can.

### REFERENCE SIGNS LIST

10 Non-aqueous electrolyte secondary battery, 11 Positive electrode, 12 Negative electrode, 12A End portion, 13 Separator, 14 Electrode assembly, 16 Housing can, 17 Sealing assembly, 18, 19 Insulating plate, 20 Positive electrode lead, 21 Grooved portion, 23 Internal terminal plate, 24 Lower vent member, 25 Insulating member, 26 Upper vent member, 27 Cap, 28 Gasket, 30 Positive electrode current collector, 31 Positive electrode mixture layer, 40 Negative electrode current collector, 41 Negative electrode mixture layer, 42 Negative electrode mixture layer coated portion, 43, Negative electrode current collector exposed portion, 50 Adhesion layer, 50A End portion, 51 Slit

## Claims

1. A non-aqueous electrolyte secondary battery, comprising:
an electrode assembly in which a band-shaped positive electrode and a band-shaped negative electrode are wound around a separator; and
a cylindrical bottomed housing can that houses the electrode assembly, wherein
the negative electrode includes, on at least an outer circumferential surface of a negative electrode current collector, a negative electrode current collector exposed portion where a negative electrode mixture layer is not provided and the negative electrode current collector is exposed,
the negative electrode current collector exposed portion is provided on an outermost circumference of the electrode assembly,
an adhesion layer is provided in at least a part of an inner circumferential surface of the negative electrode current collector exposed portion, and
the negative electrode current collector exposed portion is bonded to the negative electrode opposite to the negative electrode current collector exposed portion by the adhesion layer.

2. The non-aqueous electrolyte secondary battery according to claim 1, wherein the adhesion layer is provided in a range of a length less than or equal to 0.5 circumferences of the electrode assembly from an end portion of the negative electrode on the winding end side.

3. The non-aqueous electrolyte secondary battery according to claim 1, wherein a thickness of the adhesion layer is less than or equal to 5.0 µm.

4. The non-aqueous electrolyte secondary battery according to claim 1, wherein the adhesion layer is provided across the width of the negative electrode.

5. The non-aqueous electrolyte secondary battery according to claim 1, wherein only the negative electrode current collector exposed portion is provided on an outermost circumferential surface of the electrode assembly.

6. The non-aqueous electrolyte secondary battery according to claim 1, wherein the negative electrode mixture layer includes a silicon-containing material as the negative electrode active material.

7. The non-aqueous electrolyte secondary battery according to claim 1, wherein the negative electrode is provided with a slit that extends along a width direction of the negative electrode on a winding inner side relative to the adhesion layer.

8. A method of manufacturing a non-aqueous electrolyte secondary battery, comprising the steps of:
forming an electrode assembly by winding a band-shaped positive electrode and a band-shaped negative electrode around a separator;
forming an adhesion layer on an inner circumferential surface of a negative electrode current collector exposed portion where a negative electrode mixture layer is not provided on at least an outer circumferential surface of a negative electrode current collector;
forming a slit that extends in a width direction of the negative electrode on a winding inner side relative to the adhesion layer in the negative electrode; and
cutting the slit after inserting the electrode assembly, to which the negative electrode current collector exposed portion is bonded by the adhesion layer, into a cylindrical bottomed housing can.

9. The method of manufacturing a non-aqueous electrolyte secondary battery according to claim 8, wherein the slit is cut by pressurizing the interior of the housing can.
